Europäisches Patentamt

European Patent Office

Office européen des brevets

(19)

(11) Veröffentlichungsnummer: **0 376 106**
**A2**

(12) ## EUROPÄISCHE PATENTANMELDUNG

(21) Anmeldenummer: **89123334.8**

(22) Anmeldetag: **16.12.89**

(51) Int. Cl.5 **F02M 35/00, B01D 46/00**

(30) Priorität: **24.12.88 DE 3843798**
**30.06.89 DE 3921453**

(43) Veröffentlichungstag der Anmeldung:
**04.07.90 Patentblatt 90/27**

(84) Benannte Vertragsstaaten:
**DE FR GB IT NL**

(71) Anmelder: **Pohl, Christoph**
**Vormholzer Strasse 114**
**D-5810 Witten 3(DE)**

Anmelder: **Pohl, Uta**
**Vormholzer Strasse 114**
**D-5810 Witten 3(DE)**

(72) Erfinder: **Pohl, Hans O.**
**Platz an der Schmiede 3**
**D-5810 Witten(DE)**
Erfinder: **Pohl, Hans Christoph, Dr.**
**Vormholzer Strasse 114**
**D-5810 Witten(DE)**

(54) **Verfahren und Anlage zur Regeneration von Filterelementen.**

(57) Die Regeneration von verschmutzen Luftfiltern für Verbrennungsmotoren ist technisch möglich; gereinigte Luftfilterelemente erfüllen die Produktspezifikation der Automobilhersteller. Auch Mehrfachreinigung und Wiedereinsatz sind möglich, so lange mechanische Beschädigungen nicht auftreten.

Damit sind die technischen Voraussetzungen für die Mehrfachbenutzung gegeben mit den volks-und betriebswirtschaftlichen Folgen: Resourcenschonung, Entlastung der Abfallwirtschaft und der Umwelt, Verbilligung der Filterverwendung.

Es werden Verfahrensfolge und technische Einrichtungen zur Regeneration gebrauchter Filterelemente beschrieben.

Wesentliche Verfahrensmerkmale sind:
Die Prozeßschritte Vorreinigen, Reinigen, Trocknen, Prüfen erfolgen in einer Aufspannung, das Reinigungsmittel durchströmt das Filtermedium von der Reinluftseite her, regenerierte Filterelemente werden als solche gekennzeichnet.

Die Anlage zur Durchführung des Regenerationsverfahrens berücksichtigt unterschiedliche Filterformen:

**Kreisrringförmige** Filterelemente werden in großer Zahl auf einen zylindrischen Filterelementträger aufgezogen, dieBehandlungsschritte Reinigen, Trocknen, Prüfen erfolgen durch umschalten der Stoffströme in **einer** Station.

**Quaderförmige** (zylindrische) Filterelemente werden in kleiner Zahl je Umlaufträger eingesetzt; die Behandlungsschritte Reinigen, Trocknen, Prüfen erfolgen in **verschiedenen**, hintereinander geschalteten Stationen.

FIG. 1

(Flussdiagramm:)
SAMMELN LAGERN → VORPRÜFEN → SORTIEREN AUF FILTERTRÄGER → VORWASCHEN SPEICHERN → REINIGEN → TROCKNEN → PRÜFEN → VEREINZELN → Kontrollieren → Markieren → VERPACKEN

## Verfahren und Anlage zur Regeneration von Filterelementen

Die Erfindung betrifft ein Verfahren zur Regeneration von gebrauchten und verschmutzten Luftfiltern für Kraftfahrzeuge, das die Prozeßschritte Sortieren, Vorprüfen, Chargieren, Speichern (Vorreinigen), Reinigen, Trocknen, Prüfen, Vereinzeln, Verpacken aufweist.

Filterelemente zur Luftfiltration für Verbrennungsmotoren bestehen aus einem Filterfasermedium definierter Gasdurchlässigkeit, formgebenden Elastomerrahmen und Elastomerdichtlippen, gelegentlich verstärkt durch Streckmetall- oder Lochblechelemente. Das eigentlich filterwirksame Bauteil ist das für den Luftdurchgang vorgesehene Filterfasermedium.

Dieses Filterfasermedium muß gegenüber den Beanspruchungen, die sich aus dem Einsatzfall ergeben, beständig sein. Es ist daher beständig gegenüber Wasser, Salzlösungen (Streusalze), Säuren, Mineralölen und Treibstoffen mit ihren jeweiligen Additiven, soweit sie in Verbrennungsmotoren typisch eingesetzt werden, in den für den Einsatzfall typischen Mengen und Konzentrationen . Diese Beständigkeit gilt für Temperaturen von -60 grd. C bis +140 grd. C. Auch lange Aufenthalte in Wasser, wässrigem Milieu, selbst Seewasser, verändern Form und Struktur, insbesondere die Mikrostruktur nicht.

Die beim Einsatz auftretende Verschmutzung besteht aus Stäuben, Salzen, organischen Substanzen (Treibstoffspuren), Insekten etc., wie sie in der vom Motor angesaugten Verbrennungsluft auftreten.

Durch die beabsichtigte Abscheidung dieser Verunreinigungen auf bzw. in dem Filtermedium verliert dieses an Durchlässigkeit, es wächst der Luftdurchgangswiderstand und damit der Druckverlust im Luftfilter. Sobald der Druckverlust einen bestimmten Wert erreicht hat, soll der verschmutzte Filtereinsatz durch einen neuen ersetzt werden. Stark verschmutzte Filter führen zu Abweichungen von dem optimalen Brennstoff- Luftverhältnis und so zu erhöhtem Treibstoffverbrauch, sowie - daraus folgend - zu erhöhter Umweltverschmutzung. Auch bei Einsatz von geregelten und ungeregelten Katalysatoren wird deren Lebensdauer durch verschmutzte Filtereinsätze ungünstig beeinflußt.

Bisher von den Herstellern empfohlene und auch übliche Praxis ist es, daß bei Filterwechsel das verschmutzte Element verworfen, unsortiert dem Werkstattabfall zugeordnet und als mineralöl- und fettverschmutzter Industrieabfall in von den einzelnen Bundesländern dazu autorisierten Sondereinrichtungen entsorgt, im allgemeinen verbrannt wird. Anschließend wird ein "neues" Filterelement eingebaut.

Je nach Betriebsbedingungen sind Luftfilterwechsel alle 30-60 tausend km empfohlen: Bei 28 mio. Kraftfahrzeugen in der Bundesrepublik Deutschland und bei einer Fahrleistung von 390 mrd. km/Jahr werden pro Jahr zwischen 6 und 13 mio. Filterelemente verworfen und entsorgt sowie neu hergestellt und eingebaut. Dies führt zu einem **Entsorgungsvolumen** von 17600 - 35000 m3/a. Im Bereich der EG werden pro Jahr zwischen 33 mio. und 66 mio. Filterwechsel erforderlich; das zu entsorgende Volumen liegt zwischen 90000 und 180000 m3/a.

Die vorliegende Erfindung hat es sich nun zur **Aufgabe** gemacht, durch verbesserte Nutzung von Luftfiltern vor Verbrennungsmotoren Beiträge zu folgenden Aspekten zu leisten:
-**Verbilligung von Luftfiltern** :
--Ermutigung zu häufigerem Filterwechsel
-**Verbesserung der Wirschaftlichkeit** des Fahrzeugbetriebes und **Verringerung der Umweltbelastung** beim Fahrzeugbetrieb:
--Senkung des Treibstoffverbrauches und häufigere Wiederherstellung der für den Motor optimalen Arbeitsbedingungen, so daß die Umweltbelastung durch unerwünschte Abgasbestandteile sinkt, bzw. bei Betrieb mit Katalysator dessen Lebensdauer steigt.
-**Entlastung der Umwelt** durch Verringerung der Zahl der zu entsorgenden, gebrauchten Filterelemente durch **Mehrfachbenutzung**, Reduzierung der Umweltbelastung, die bei Verbrennung von mineralölkontaminiertem Industrieabfall durch Bildung von $CO_2$ unweigerlich entsteht, durch Verringerung der zu entsorgenden Abfallmenge.
-**Schonung der Resourcen an Rohmaterialien** - (Fasern, Elastomere, etc.), die für Neuproduktion erforderlich wären.

**Es wird daher erfindungsgemäß vorgeschlagen**, gebrauchte und verschmutzte Luftfilterelemente für Verbrennungsmotoren so aufzuarbeiten, daß die technischen Spezifikationen neu hergestellter Filterelemente wieder erfüllt werden.

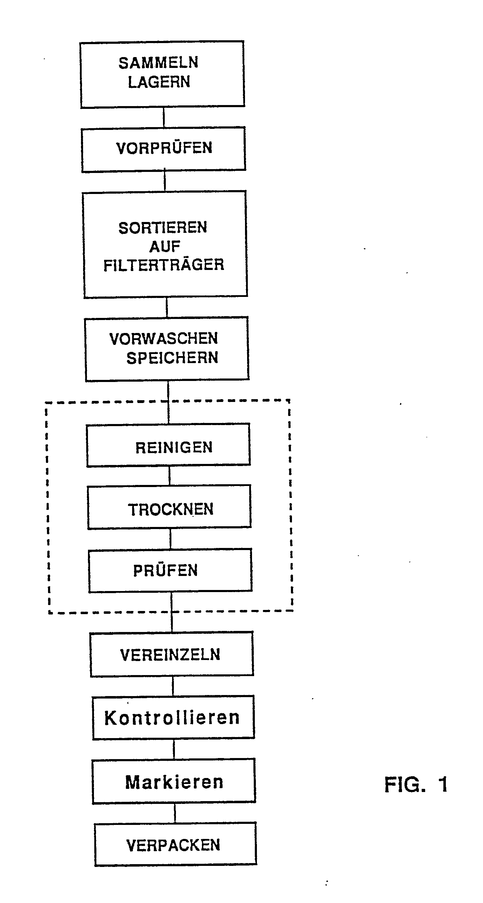

Dazu erfolgen in einem Zentralen Aufbereitungsbetrieb im wesentlichen folgende Einzelarbeitsschritte ( **Fig.1**):

1. Prüfen der aufzuarbeitenden Filterelemente auf
- mechanische Beschädigung an Dichtlippen und Filtermedium
- geometrische Toleranzen
(Ausschuß eliminieren zur Endentsorgung)

2. Sortieren nach Abmessungen/Größen

3. Beladen von Filterelementträgern mit verschmutzten Elementen

4. Einsetzen in ein Anlösebad/Vorreinigung mit Waschmittellösung oder mit einer die Reinigung vorbereitenden Atmosphäre (Dampf). 5. Einsatz in die Reinigungsstation und Klarspülen mit Warmwasser oder Dampf, bevorzugt bei Temperaturen in der Nähe des Siedepunktes, Trocknung mit überhitztem Dampf und/oder mit Warmluft, am Ende der Trocknungsphase Prüflauf für Durchsatz und Druckverlust. Wesentliches **Verfahrensmerkmal** ist, daß der Reinigungsmittelstrom die Filterelemente entgegen der Stromrichtung der Verbrennungsluft im Einsatzfall durchläuft. So werden die Schmutzpartikel in der Richtung entfernt, aus der sie das Filterelement verschmutzt haben. Der Verschmutzungsvorgang wird umgekehrt und nicht penetrierte Zonen werden sauber gehalten. Weitere Bedingung ist, daß die Durchströmung mit partikelfreiem Reinigungsmedium erfolgt.

6. Ausheben des Filterelementträgers, vereinzeln

7. Kontrolle

8. Zur Kennzeichnung der spezifikationsgerechten Wiederaufarbeitung erhält jedes Filterelement eine Farbkennzeichnung, z.B. einen grünen Streifen je Aufarbeitung.

9. Abstreifen der Einzelfilterelemente in die Verpackung.

Hierbei kann, je nach Verschmutzungsgrad und Reinigungsbedarf, der eine oder andere Zwischenschritt entfallen.

Grundlage für die erfindungsgemäße Lösung der Aufgabe ist die neue Erkenntnis, daß

1. Luftfilter bei spezifikationsgerechtem Betrieb lediglich durch Verunreinigung, nicht durch Veränderung der Struktur des Filtermediums unbrauchbar werden (abgesehen von mechanischen Einflüssen, die jedoch bei dem Gegenstand der Erfindung keine Rolle spielen)

2. verschmutzte Filterelemente ganz allgemein mit den Medien, innerhalb deren die arbeiten (Luft, Wasser, Dampf, elektroakustische Wellen), auch gereinigt werden können, bei Wasser ggf. unterstützt durch grundsätzlich bekannte, biologisch abbaubare Waschmittel, die so aufgebaut sind, daß die Struktur des Filtermediums unberührt bleibt

3. durch Wiedereinsatz so gereinigter Filterelemente die Reinigungsfunktion für Verbrennungsluft in gleicher Weise wie beim Neuprodukt gewährleistet ist.

Als Reinigungsmittel können alle Medien dienen, denen gegenüber das Filtermedium bei spezifikationsgerechtem Einsatz beständig ist, die Reinigungswirkung kann durch Ultraschallwellen bewirkt oder verstärkt werden.

Die Wiederaufbereitungsanlage zur Durchführung des erfindungsgemäßen Verfahrens besteht aus dem Eingangslager, der Chargierstation, der Speicher- und Vorreinigungseinheit, der Reinigungsstation mit Filterelementträger, sowie der Prüf-, Kennzeichnungs- und Verpackungsstation.

Die technische Ausführung der einzelnen Behandlungstationen berücksichtigt die Form der Filterelemente (Kreisring, Quader, Zylinder).

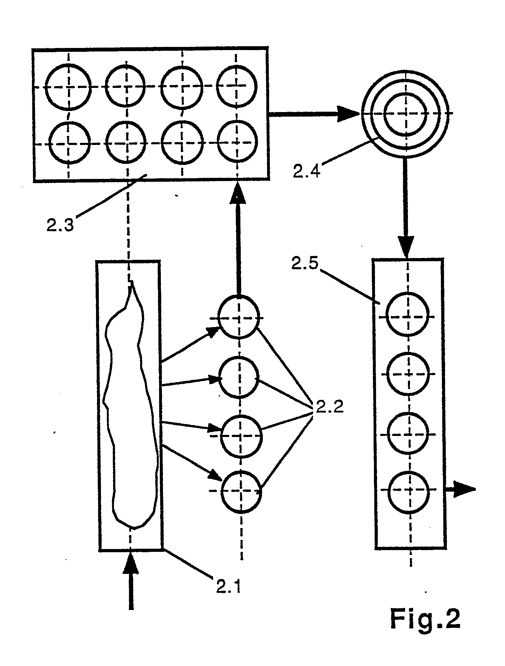

**Fig.2** zeigt beispielhaft die Anordnung der Teilanlagen in einer Gesamtanlage für **kreisringförmige** Filterelemente. Hier bezeichnen die Ziffern

2.1 das Eingangslager

2.2 mehrere Chargierstationen für Filterelemente

2.3 die Vorwäsche ( Speicherung, Anlösung)

2.4 den Reinigungsautoclaven

2.5 Vereinzelung, Kennzeichnung und Verpackung.

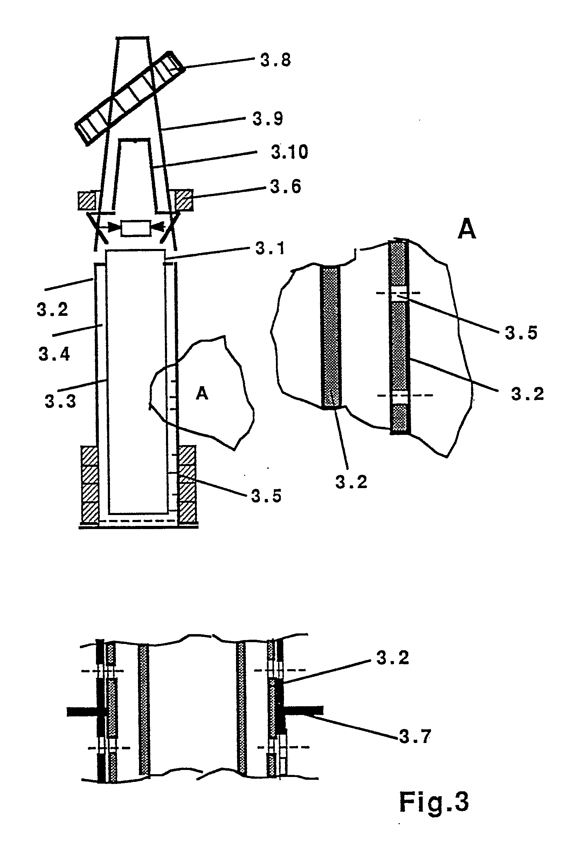

Nachfolgend werden weitere Teilanlagen der Gesamtanlage mit ihren Funktionen beschrieben: Der **Filterelementträger** 3.1, **Fig.3**, besteht aus einem äußeren zylindrischen Rohr 3.2 mit konzentrisch angeordnetem Innenrohr 3.3. Zwischen beiden Rohren entsteht so ein Ringspalt 3.4. Das Außenrohr 3.2 hat auf den Umfang gleichmäßig verteilt, über die Höhe in Abständen, die der Filterelementhöhe entsprechen, Bohrungen 3.5. Ziffer 3.6 bezeichnet die aus gefaltetem Filterfasermedium gebildeten Filtertaschen. Die ringförmigen Filterelemente 3.8 werden sortiert (von Hand oder maschinell), z.B. über den kegelstumpfförmigen Spreizzuteiler 3.9 einzeln auf Tragteller 3.7 oder bei Verzicht auf die Tragteller- auf das entsprechend ausgebildete Oberteil 3.1 des Filterelementträgers gesetzt .Dabei erleichtert die Kegelstumpfform das Chargieren der Filterelemente, die Spreizraste 3.10 erlaubt kontinuierliche Beschikkung des Spreizzuteilers und taktweise Beladung des Filterelementträgers. In Fig. 3 ist die Spreizraste 3.10 in sperrendem Zustand gezeigt. Insbesondere können Tragteller dazu benutzt werden, Filterelemente unterschiedlicher Durchmesser an den Außendurchmesser des Filterelementträgers anzupassen, so daß diese stets gleichen Schaftdurchmesser haben, während die Tragteller bei gleichen Innendurchmessern verschiedene Außendurchmesser aufweisen.

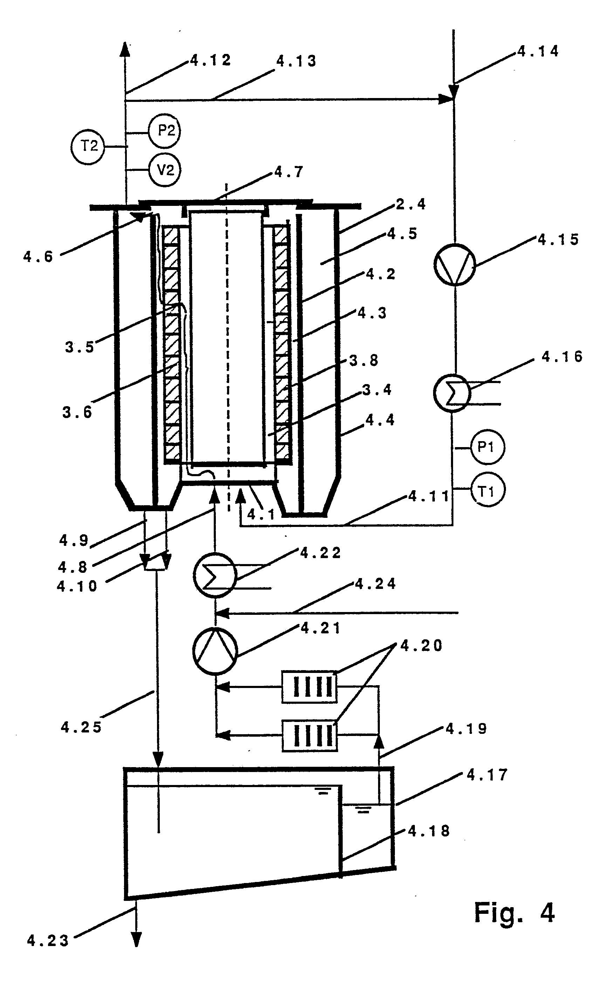

Der mit ringförmigen Filterelementen 3.8, (die ggf. durch tellerförmige Elemente 3.7 voneinander getrennt sind) besetzte Filterelementträger wird in den Reinigungsautoklav 2.4, **Fig.4**, feststehend oder drehbar gelagert eingesetzt, so daß durch geeignete Anschlüsse in der Bodenplatte 4.1 der Ringraum 3.4 mit Reinigungsmedium, Dampf und Trockenmedium versorgt werden kann.

Der Innendurchmesser der Aufnahmehülse 4.2 des Autoklaven 2.4 bildet mit dem Außendurchmesser des Filterelementes 3.8 einen Ringspalt 4.3. Die Aufnahmehülse bildet mit der zylindrischen Außenwand 4.4 des Autoklaven wiederum einen Ringspalt 4.5, wobei die Höhe der Hülse 4.2 jedoch niedriger als die lichte Gefäßhöhe ist, so daß ein Überlauf 4.6 entsteht. Der Reinigungsautoklav wird durch einen Deckel 4.7 abgeschlossen. Über die Leitung 4.8 wird dem Boden des Filterelementträgers Reinigungsmedium zugeführt, das den Ringspalt 3.4 , die Bohrungen 3.5 und die Filtertaschen 3.6 von innen nach außen durchströmt, sich in dem Ringraum 4.3 sammelt, nach oben in den Ringraum 4.5 überläuft und den Autoklaven mit dem abgelösten Schmutz durch den Abzug 4.9 verläßt. Der Waschmittelhauptstrom 4.25 wird dem Absetztank 4.17 zugeführt. Das Sauberwasser passiert ein Wehr 4.18, wird über Leitung 4.19, Filter 4.20, die Umwälzpumpe 4.21 und die Aufheizung 4.22 wieder dem Autoclaven über den Anschluß 4.8 zugeführt. Über den Abzug 4.23 wird Schlamm als Teilstrom ausgeschleust; ein entsprechender Teilstrom 4.24 mit frischem Waschmittel wird vor oder hinter der Umwälzpumpe 4.21 zugeführt. Der Ringraum 4.3 zwischen Autoklav und Filterelementträger weist einen Absaugabfluß 4.10 auf, aus dem bei Beendigung des Waschvorganges die Flüssigphase abgesaugt werden kann, bevor der Trocknungsvorgang eingeleitet wird.

Der drehbar gelagerte Filterelementträger kann einen Zentrifugierantrieb aufweisen; in diesem Falle würde der Trocknungsvorgang durch Zentrifugieren eingeleitet.

Über den Anschluss 4.11 wird warmes, gasförmiges Trocknungsmittel zugeführt, das durch inneren Ringspalt 3.4, Bohrungen im Außenrohr 3.5, Filtertaschen 3.6, äußeren Ringspalt 4.3 strömt, die Filterelemente trocknet und an der Oberseite des Außenringspaltes 4.5 abgesaugt wird. Ein Teilstrom 4.12 wird ausgeschleust, der Hauptstrom 4.13 wird zurückgeführt, ein dem ausgeschleusten Teilstrom entsprechender Strom 4.14 frischen Trocknungsmittels (ggf. Luft) wird eingeschleust, und der so entstandene Gesamtstrom wird durch das Gebläse 4.15 umgewälzt und im Heizaggregat 4.16 auf Solltemperatur gebracht.

Die Drücke P1, P2 und die Temperaturen T1, T2 des gasförmigen Trocknungsmittels am Eintritt in und am Austritt aus dem Autoclaven werden durch dort angeordnete Meßstellen gemessen und registriert. Während des Trocknungsvorganges ist T2 stets niedriger als T1. Am Ende des Trocknungsvorganges wird T2 gleich der Regeltemperatur T1. Mit Hilfe der Druck@messungen P1, P2 und des am Austritt angeordneten Volumenmessers V2 können in dieser Phase charakteristische Werte für Volumenstrom V und und den zugehörigen Druckverlust ermittelt werden, die als Prüfkriterien für die Kennzahlen des Filterelementes benutzt werden (das Filterelement muß für einen bestimmten Volumenstrom V einen zugehörigen Druckverlust aufweisen, z.B. 300 mmWS bei einem Volumenstrom von 4,5 Kubikmeter pro Minute).

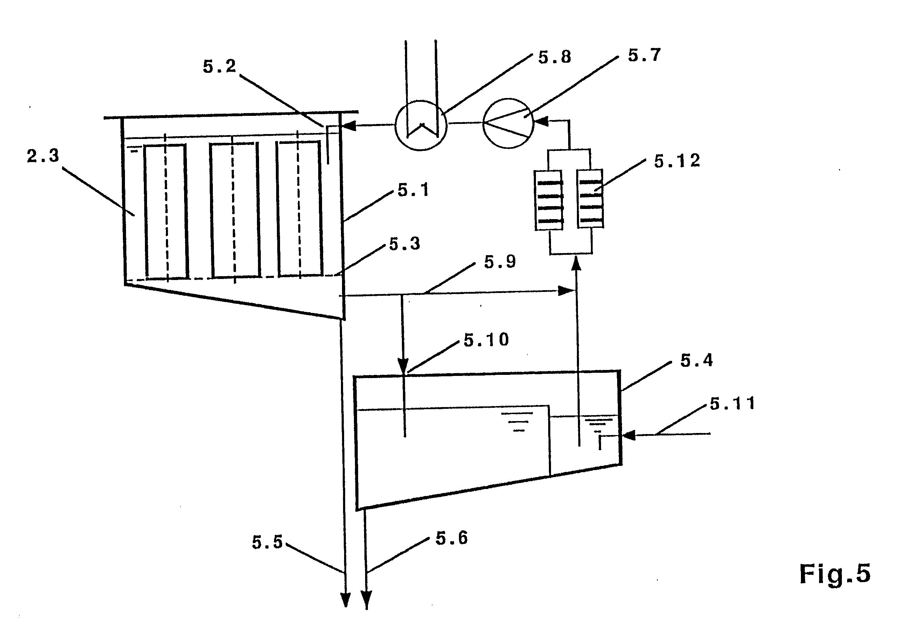

Die Vorwäsche- Anlösestation 2.3, **Fig.5**, besteht aus einem Aufnahmebehälter 5.1, in den die chargierten Filterelementträger geführt eingesetzt werden. Der Waschmittelstrom 5.9 wird beim Eintritt 5.2 in den Aufnahmebehälter 5.1 von oben absteigend geführt, so daß eine **Durchströmung** des Filterelementes **unterbleibt**, um zu vermeiden, daß Schmutzpartikel tiefer in das Filtermedium selbst eindringen (siehe auch Text Ziffer 5 zu Fig.1).

Der Gefäßboden 5.3 wird durch einen durchlässigen Rost gebildet, unterhalb dessen Schlamm gesammmelt und abgezogen wird. Der Behälter kann für die Aufnahme je eines Filterelementträgers, aber auch zur Aufnahme einer Vielzahl von Filterelementträgern ausgebildet sein .
Der Waschmittelkreislauf 5.9 der Vorwäsche ist zweckmäßig getrennt von dem Waschmittelkreislauf des Reinigungsautokaven 2.4, hat aber ebenfalls die dort beschriebenen Elemente Sedimentationstank 5.4, Schlammabzüge 5.5,5.6, Filter 5.12, Umwälzpumpe 5.7, Beheizung 5.8.
Während beim Reinigungsautoclaven 2.4 das Absetzbecken 4.17 im Waschmittelhauptstrom liegt, passiert bei der Vorwäsche nur der Teilstrom 5.10 den Absetztank 5.4 , und der durch Abzug 5.6 abgestoßene Schlammstrom wird durch Zusatz des Waschmittelteilstromes 5.11 ausgeglichen, wobei dieser Strom z.B. an beliebiger Stelle stetig oder unstetig zugeführt werden und unbeheizt oder beheizt sein kann.
Regelung der Umlaufströme, der Flüssigkeitspegel und der Temperaturen erfolgt in bekannter Weise.
Zwischen Vorwäsche und Wascheinheit kann Energieverbund bestehen, die Beheizungsniveaus können zur Verbesserung der Wirtschaftlichkeit aufeinander abgestimmt werden.

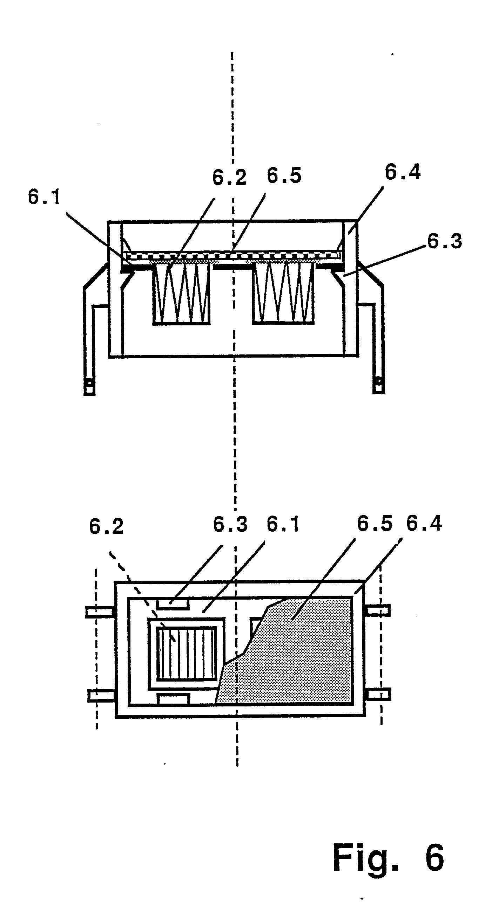

**Fig.6** zeigt beispielhaft die Anordnung zur Regeneration quaderförmiger (zylinderförmiger) Filterelemente.

Bei der Reinigung quaderförmiger Filter ist die gleiche Verfahrensschrittfolge vorgesehen (wobei über die Durchführung der einzelnen Schritte nach Zweckmäßigkeit entschieden wird; ggf. kann auch hier der eine oder andere Schritt entfallen).

Die Einrichtung zur Durchführung des Verfahrens wird an Hand der **Fig. 6,7,8** beispielhaft beschrieben.

Filterelementträger in **Fig.6** ist ein Rahmen **6.1**, der rechteckige Ausnehmungen zur Aufnahme der quaderförmigen Filterelemente **6.2** aufweist (die Abmessungen richten sich nach den vorkommenden Filterpaketen). Der Rahmen liegt auf Rasten **6.3** des Transport- Umlaufträgers **6.4**. Das Filterelement **6.2** wird durch ein Loch- oder Gitterblech **6.5** im Rahmen **6.1** fixiert. Der Umlaufträger **6.4** ist ein rechteckiger Kasten mit geschlossenen Seitenwänden, den Rasten **6.3**, jedoch nach oben und unten offen. Die Kastenseitenwände sind hinsichtlich ihrer Höhe genau bearbeitet.

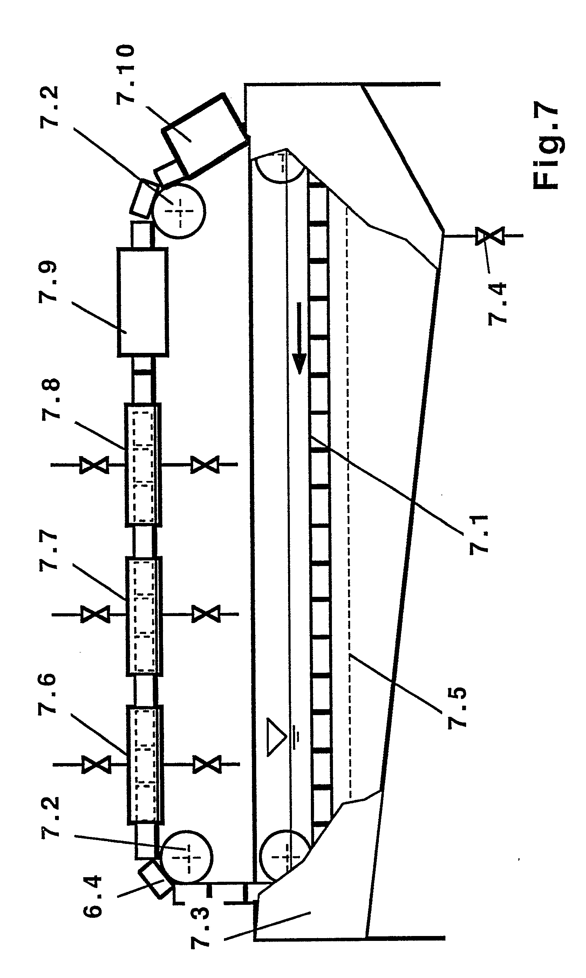

Eine Vielzahl von Umlaufträgern ist in einem Umlaufsystem angeordnet. Hierbei kann der Umlauf oder Vorschub durch umlaufende Ketten und/oder Seile **7.1** , Drehtrommeln , durch Schubeinrichtungen o.ä. erfolgen. In **Fig.7** ist beispielhaft ein Seilumlaufsystem **7.1** dargestellt, wobei die Seile oder Ketten rechts und links der Umlaufträger von einem Rollengerüst **7.2** geführt werden. Das Rollengerüst ruht in einem Auffangbecken **7.3** mit Ablauf **7.4** und Gitterrost **7.5**. Das Becken kann ein Reinigungsmedium zur Vorwäsche enthalten. Im oberen Bereich des Rollengerüstes sind folgende Stationen (die den Prozeßschritten entsprechen) angeordnet:

Station **7.6** ist die Reinigungsstufe. Sie ist ein rechteckiger Kanal zur Passage der Umlaufträger **6.4** , sie hat eine Reinigungsmittelzufuhr entsprechend **Fig.4** , bestehend aus Auslaßventil, Sammelbehälter, Reinigungsmittelfilter, Umwälzpumpe und Heizaggregat, Reinigungsmittelzulauf und -ablauf. Der Reinigungsmitteleintritt ist an der Kanaloberseite, der Ablauf an der Kanalunterseite angeordnet.

Station **7.7** bildet den Trocknungskreislauf entsprechend **Fig.** 4 mit den Elementen: Messung von Temperatur, Druck und Volumenstrom, Umwälzpumpe, Beheizungseinrichtung, Ausschleusung von nassem Trocknungsmittel, Einschleusung von frischem Trocknungsmittel.

Station **7.8** dient zur Prüfung von Druckverlust und Volumenstrom durch die gereinigten Filter.

In den Stationen **7.9** und **7.10** werden gereinigte Filter entnommen, bzw. verschmutzte Filter chargiert.

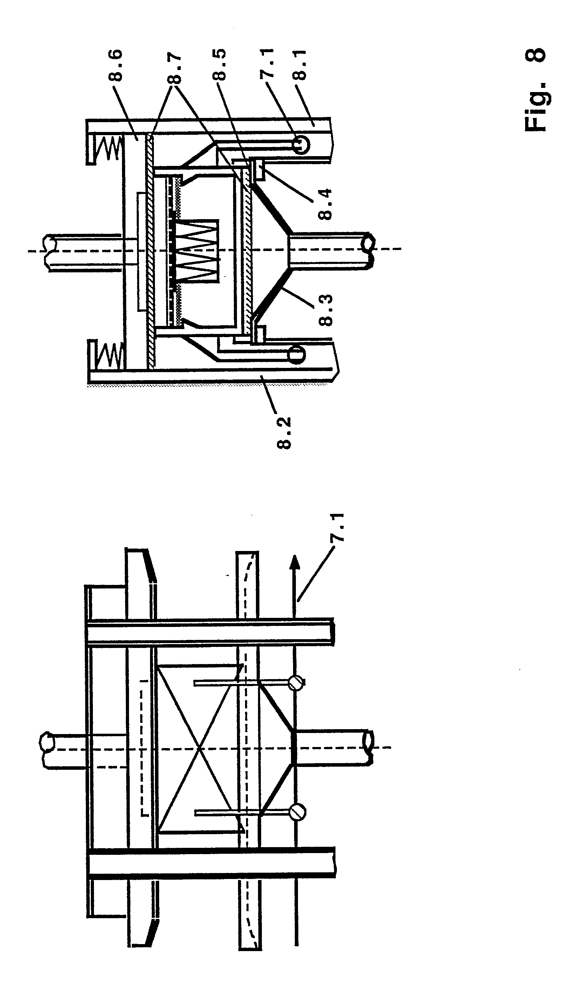

**Fig. 8** zeigt Quer- und Längsschnitt des Kanals an den Stationen **7.6, 7.7, 7.8**. Der lichte Querschnitt des Kanals umfaßt die Außenkonturen des Umlaufträgers mit der Kupplung zum Umlaufsystem (hier beispielhaft Umlaufseil); er hat rechts und links feststehende seitliche Konstruktionen **8.1, 8.2**, einen zum Abfluß geneigten Boden **8.3** und umlaufende Auflageleisten **8.4** für eingelegte Bodenplatten **8.5**. Den oberen Abschluß bildet eine z.B. durch Federkraft angedrückte Deckplatte **8.6**. Bodenplatte und Deckplatte tragen Platten **8.7** aus Gleitbelagmaterial, z.B. Polyäthylen, sie bilden mit den bearbeiteten Stirnflächen der Umlaufträger jeweils Dichtpaarungen gegen Durchtritt von Reinigungsmittel, Trocknungsmittel und Prüfmedien. Die Deckplatte enthält den Anschluß für die Behandlungsmittelzufuhr, der Gleitbelag hat die erforderliche Perforationen.

Kanal und eingefahrene Umlaufträger bilden ein abgeschlossenes Behandlungsvolumen. Zur Behandlung werden bevorzugt jeweils 3 Umlaufträger in die Stationen **7.6, 7.7, 7.8** eingefahren, so daß die beiden äußeren Umlaufträger die Abdichtung verbessern, während im mittleren Umlaufträger der jeweilige Prozeß abläuft.

Bezeichnungsliste

2.1 Eingangslager
2.2 Chargierstation
2.3 Vorwäsche (Speicherung, Anlösung)
2.4 Reinigungsautoclav
2.5 Vereinzelung
3.1 Filterelementträger
3.2 Äußeres zylindrisches Rohr
3.3 Konzentrisch angeordnetes Innenrohr
3.4 Ringspalt
3.5 Filterelementträger
3.6 Filtertaschen
3.7 Tragteller
3.8 Ringförmiges Filterelement
3.9 Spreizzuteiler
3.10 Spreizraste
4.1 Bodenplatte
4.2 Aufnahmehülse des Autoclaven
4.3 Ringspalt
4.4 Zylindrische Außenwand
4.5 Äußerer Ringspalt
4.6 Überlauf
4.7 Deckel
4.8 Leitung für Reinigungsmedium
4.9 Abzug außen
4.10 Abzug innen
4.11 Anschluß
4.12 Teilstrom angereicherten Trocknungsmittels
4.13 Hauptstrom
4.14 Teilstrom frischen Trocknungsmittel
4.15 Gebläse
4.16 Heizaggregat
4.17 Absetztank
4.18 Wehr
4.20 Filter
4.21 Umwälzpumpe
4.22 Aufheizung
4.23 Abzug
4.24 Teilstrom
4.25 Waschmittelhauptstrom
5.1 Aufnahmebehälter
5.2 Eintritt in den Aufnahmebehälter
5.3 Gefäßboden
5.4 Sedimentationstank
5.5 Schlammabzug
5.6 Schlammabzug
5.7 Umwälzpumpe
5.8 Beheizung
5.9 Waschmittelkreislauf
5.10 Teilstrom
5.11 Waschmittelteilstrom
5.12 Filter

6.1 Rahmen

6.2 Quaderfilter

6.3 Raste

6.4 Transport-Umlaufträger

6.5 Loch-Gitterplatte

7.1 Umlaufsystem (Kette, Seil,u.ä.)

7.2 Rollengerüst

7.3 Auffangbecken

7.4 Ablauf

7.5 Gitterrost

7.6 Reinigungsstation

7.7 Trocknungsstation

7.8 Prüfstation

7.9 Entnahmestation

7.10 Chargierstation

8.1 Feststehende Seitenkonstruktion

8.2 Feststehende Seitenkonstruktion

8.3 Geneigter Boden

8.4 Auflageleisten

8.5 Bodenplatte (perforiert)

8.6 Deckplatte

8.7 Platte aus Gleitmaterial

**Ansprüche**

1. Verfahren zur Sammlung und Regeneration von gebrauchten und verschmutzten Luftfilterelementen für Verbrennungsmotoren, bestehend aus gefalteten Filtertaschen in kreisringförmiger oder quaderförmiger Anordnung zum Einbau in bekannte Luftfiltergehäuse, wobei die gefalteten Filtertaschen aus bekannten, von der Automobilindustrie spezifizierten Filtermedien bestehen, die in bekannter Weise mit flexiblen Rahmen aus Elastomeren, die gleichzeitig als Dichtelemente gegenüber dem Filtergehäuse wirken, ausgestattet sind, um den Verbrennungsluftstrom in der beabsichtigten Weise zu führen, **gekennzeichnet** durch die Prozeßschritte: Sortieren, Vorprüfen, Chargieren, Speichern (Vorreinigen), Reinigen, Trocknen, Prüfen, Vereinzeln, Kennzeichnen, Verpacken.

2. Verfahren zur Regeneration von gebrauchten, verschmutzten Filterelementen, im wesentlichen bestehend aus den Teilschritten gemäß Anspruch 1, **dadurch gekennzeichnet** , daß der Regenerationsprozeß wenigstens eines der folgenden Verfahrensmerkmale aufweist:
- Bei der Vorreinigung wird das Filterelement im wesentlichen nicht durchströmt, bei der Hauptreinigung wird das Filterelement stets in der entgegengesetzten Richtung durchströmt, in der die Elemente bei spezifikationsgemäßem Einsatz von der Verbrennungsluft durchströmt und damit verschmutzt wurden. Durchströmungsrichtung bei Verschmutzung und Reinigung sind einander entgegengesetzt.
- Im Anschluß an die Trocknungsphase erfolgt nach der Reinigung ein Prüfvorgang, bei dem der Trocknungsmittelstrom gleichzeitig Prüfvolumenstrom ist, und die Druckmessungen P1 und P2 die Korrelation von Volumenstrom zum Druckverlust liefern.
- Die gereinigten und für den Wiedereinsatz geprüften Filterelemente erhalten eine Farbmarkierung.

3. Verfahren nach Anspruch 1 und 2, **dadurch gekennzeichnet,** daß die Filterelemente alle Verfahrensschritte nach der Sortierung bis zur Ablage in der Verpackung in einer Aufspannung durchlaufen.

4. Verfahren nach Ansprüchen 1-3, **dadurch gekennzeichnet**, daß als Reinigungsmittel alle die Medien dienen können, denen gegenüber das Filtermedium während des spezifikationsgemäßen Einsatzes beständig sein muß.

5. Teilanlage zur Durchführung des Verfahrens nach Ansprüchen 1-4 für kreisförmige Filterelemente, **gekennzeichnet** durch folgende Elemente:
- konzentrisch in ein zylindrisches Gehäuse des Reinigungsautoclaven einsetzbarer, zylindrischer Filterelementträger zur Aufnahme von ringförmigen Filterelementen, mit an einer Zylinderstirnfläche angeordneten Anschlüssen für Reinigungs- und Trocknungsmittelströme, mit am Außenumfang angeordneten Bohrungen für den Durchtritt von Reinigungs- und Trocknungsmittel, dem Reinigungsautoklaven, der einerseits einen inneren zylindrischen Hohlraum zur Aufnahme des mit ringförmigen Filterelementen besetzten Filterelementträgers aufweist und mit diesem einen Ringspalt bildet, andererseits einen äußeren Ringspalt, der durch die Autoclavaußenwand und die den zylindrischen Innenraum bildende Innenwand gebildet wird, deren Höhe so bemessen ist, daß ein Überlauf zwischen innerem und äußerem Ringspalt entsteht,
- Autoklavboden, der Anschlüsse zur Zufuhr von Wasch- und Trocknungsmittel mit Meßstellen für Druck und Temperatur, sowie zur Abfuhr und Absaugung von Waschmittelströmen und Flüssigphasen aus den inneren und äußeren Ringräumen aufweist,
- ringförmiger, äußerer Autoklavdeckel, der einen Anschluß zu Abfuhr und Absaugung des gasförmigen Trocknungsmittelstromes mit Druck-, Temperatur-und Volumenstrommessung aufweist,
- zur Aufnahme von ringförmigen Filterelementen unterschiedlicher Durchmesser werden Tragteller mit stets gleichem, an den Durchmesser des Filterelementträgers angepaßtem Innendurchmesser, jedoch mit an die verschiedenen Filterelemente angepaßten Außendurchmessern eingesetzt,
- der Spreizzuteiler hat Kegelstumpfform, und die Spreizraste erlaubt sowohl taktweise Einzelbeschikkung als auch gruppenweise Beschickung des Filterelementträgers, - der Filterelementträger kann drehbar gelagert sein, um Zentrifugierantrieb zu erlauben, - zur Unterstützung des Reinigungsvorganges können die innere zylindrische Wand des Reinigungsautoclaven oder die äußere zylindrische Wand des Filterelementträgers als Ultraschallschwinger ausgebildet sein.

6. Einrichtung zur Durchführung der Verfahrensschritte nach den Ansprüchen 1 bis 4 zur Regeneration von **quader- und zylinderförmigen** Filterelementen für Verbrennungsmotoren, wobei die zu behandelnden quaderförmigen oder zylinderförmigen Filterelemente in **einer** Aufspannung alle erforderlichen Behandlungsschritte durchlaufen, **dadurch gekennzeichnet,** daß die Filterelementträger innerhalb einer Umlaufeinrichtung so angeordnet sind, daß sie getaktet durch die zwischen Chargier- und Entnahmestation vorgesehenen Behandlungsstufen transportiert werden, die jeweiligen Behandlungsschritte getaktet begonnen und beendet werden und zwischen den Behandlungen reine Transport- und Vorschubphasen angeordnet sind. Dabei kann das Umlaufssystem eine Drehtrommel, ein ketten-oder seilgeführtes Umlaufssystem oder eine beliebig angetriebene, getaktete Vorschub- und Rückführstraße sein, wobei die Umlaufträger lösbar mit dem Transportsystem gekoppelt sein können, so daß die Verweilzeit in den Behandlungsstationen und damit der Abstand der Umlaufträger voneinander in bestimmten Grenzen variierbar sind.

7. Anlagen nach Ansprüchenm 5 und 6, **dadurch gekennzeichnet,** daß Reinigungs- und Trocknungsmittelhauptströme im Kreislauf durch die auf Tragelemente chargierten Filterelemente geführt werden, wobei aus den Hauptströmen jeweils ein mit verschmutztem Reinigungsmittel, bezw. ein mit Feuchte angereicherter Teilstrom abgestoßen und entsprechende Teilströme mit saüberem Reinigungsmittel, bezw. ungesättigtem Trocknungsmittel dem Hauptstrom zugeführt werden.

8. Einrichtung nach Anspruch 7, **dadurch gekennzeichnet,** daß der Umlaufträger zur Aufnahme der quader- oder zylinderförmigen Filterelemente aus einem Aufnahmerahmen besteht, der an die Abmessungen der Filterelemente angepaßte Ausnehmungen aufweist und der in einem Umlaufrahmen zwischen Rasten und Lochplatte (Gitterplatte) fixiert wird, wobei der Umlaufträger vier geschlossene Seitenwände aufweist, deren obere und untere Stirnflächen unter Einhaltung von Maßtoleranzen glatt bearbeitet sind, und der Umlaufträger jeweils an den zur Transportrichtung parallelen Außenwänden Verbindungselemente zum Transportsystem aufweist.

9. Einrichtung nach Ansprüchen 7 und/oder 8, **dadurch gekennzeichnet,** daß die Gehäuse der Behandlungsstationen aus einer örtlich fixierten Untergruppe mit Führungselementen für die Umlaufträger und Bodenabläufen für Behandlungsmedien, aus einem in horizontaler Richtung beweglichen, mit Andruckelementen (Federn, Pneumatik o.ä.) versehenen Deckplatte mit Durchlässen zur Zufuhr der Behandlungsmedien bestehen, wobei zwischen den, oberen Stirnflächen des Umlaufträgers und der Deckplatte sowie den unteren Stirnwänden des Umlauträgers und der Bodengruppe jeweils perforierte Platten aus Gleitdichtmaterial angeordnet sind, so daß durch Zusammenwirken von Umlaufträger, Bodengruppe, Deckplatte, Dicht- und Andruckelementen ein abgedichtetes Behandlungsgehäuse entsteht.

10. Einrichtung gemäß Anspruch 9, **dadurch gekennzeichnet,** daß die Andruckeinrichtung entweder vorgespannt ist, im Einlaufbereich Führungen mit abnehmender Durchlaßhöhe und im Auslaufbereich Führungen mit zunehmender Durchlaßhöhe vorgesehen sind, die bei Einlauf des Umlaufträgers in die Behandlungsposition die Dichtspannung aus der Umlaufantriebskraft erzeugen (und bei Auslauf abbauen), oder der Andruckvorgang, mechanisch , elektrisch oder hydraulisch/pneumatisch durch Schaltung ausgelöst wird, sobald der Umlaufrahmen eine Sollposition erreicht hat.

```
┌─────────────────┐
│    SAMMELN      │
│    LAGERN       │
└─────────────────┘
         │
┌─────────────────┐
│   VORPRÜFEN     │
└─────────────────┘
         │
┌─────────────────┐
│   SORTIEREN     │
│      AUF        │
│  FILTERTRÄGER   │
└─────────────────┘
         │
┌─────────────────┐
│   VORWASCHEN    │
│   SPEICHERN     │
└─────────────────┘
         │
 ┌ ─ ─ ─ ─ ─ ─ ─ ─ ┐
 ┌─────────────────┐
 ││   REINIGEN     ││
 └─────────────────┘
 │        │        │
 ┌─────────────────┐
 ││   TROCKNEN     ││
 └─────────────────┘
 │        │        │
 ┌─────────────────┐
 ││    PRÜFEN      ││
 └─────────────────┘
 └ ─ ─ ─ ─ ─ ─ ─ ─ ┘
         │
┌─────────────────┐
│   VEREINZELN    │
└─────────────────┘
         │
┌─────────────────┐
│  Kontrollieren  │
└─────────────────┘
         │
┌─────────────────┐
│   Markieren     │
└─────────────────┘
         │
┌─────────────────┐
│   VERPACKEN     │
└─────────────────┘
```

FIG. 1

Fig.2

Fig.3

Fig. 4

Fig.5

Fig. 6

Fig.7

EP 0 376 106 A2

Fig. 8

EP 0 376 106 A2